## Europäisches Patentamt
## European Patent Office
## Office européen des brevets

(19)

(11) Numéro de publication: **0 056 208**
**B1**

(12)

# FASCICULE DE BREVET EUROPEEN

(45) Date de publication du fascicule du brevet:
27.03.85

(51) Int. Cl.⁴: **H 04 L 7/02**

(21) Numéro de dépôt: **81402031.9**

(22) Date de dépôt: **18.12.81**

(54) Procédé et dispositif de synchronisation de messages.

(30) Priorité: **09.01.81 FR 8100313**

(43) Date de publication de la demande:
**21.07.82 Bulletin 82/29**

(45) Mention de la délivrance du brevet:
**27.03.85 Bulletin 85/13**

(84) Etats contractants désignés:
**DE GB**

(56) Documents cités:
**DE - A - 2 738 648**
**FR - A - 2 420 253**
**FR - A - 2 479 620**
**GB - A - 1 526 711**

**PROCEEDINGS OF THE SYMPOSIUM ON COMPUTER PROCESSING IN COMMUNICATIONS 8,9,10 avril 1969 BROOKLYN POLYTECHNIK PRESS, 1970 NEW YORK (US) A. GERSHO "Linear adaptation", pages 653-664 IEEE TRANSACTIONS ON COMMUNICATIONS volume COM-23, no. 9, septembre 1975 NEW YORK (US) L. WIESS et al. "Video encoding using an adaptive digital delta modulator with overshoot suppression", pages 905-920**

(73) Titulaire: **THOMSON-CSF, 173, Boulevard Haussmann, F-75379 Paris Cedex 08 (FR)**

(72) Inventeur: **Fourcade, Pierre, THOMSON-CSF SCPI 173,bld Haussmann, F-75360 Paris Cedex 08 (FR)**
Inventeur: **Dupray, DOminique, THOMSON-CSF SCPI 173, bld Haussmann, F-75360 PAris Cedex 08 (FR)**

(74) Mandataire: **Lincot, Georges et al, THOMSON-CSF SCPI 173, Bld Haussmann, F-75379 Paris Cedex 08 (FR)**

# Description

La présente invention concerne un procédé et un dispositif de synchronisation de messages. Elle concerne plus particulièrement un procédé et un dispositif de synchronisation de messages brefs transmis selon le mode de transmission dit à évasion de fréquences.

On entend par message un ensemble de données numériques transmises en bloc, et nécessaires à la mise en oeuvre d'un traitement donné.

Lors de la réception des messages, il est nécessaire de synchroniser le récepteur à partir des données reçues. En effet, le rythme des éléments binaires constituant le message est connu du récepteur, mais la phase des ces éléments binaires ne l'est pas et il faut reconstituer, à partir des informations reçues, un signal d'horloge de réception qui soit en phase avec ces informations.

On entend par transmission à évasion de fréquences un mode de transmission selon lequel chaque message est transmis en modulant une fréquence porteuse différente, de manière à éviter une interception de ces messages par un tiers non destinataire.

Le problème de la synchronisation se pose avec encore plus d'acuite dans les systèmes de transmission du type à évasion de fréquences, du fait que les écarts de phases sur les données reçues peuvent varier en fonction de la fréquence porteuse utilisée pour la transmission. Il est alors nécessaire d'utiliser des dispositifs de synchronisation très performants, c'est-à-dire permettant de retrouver très rapidement la synchronisation, et ce d'autant plus que les messages transmis sont brefs.

Un procédé de synchronisation connu consiste à asservir à la phase des messages reçus la phase d'un signal d'horloge de réception ayant un rythme égal au rythme du signal d'horloge d'émission, l'asservissement consistant à faire évoluer, à chaque transition d'un message reçu, la phase du signal d'horloge de réception d'une quantité égale à $+$ ou $-\dfrac{2\pi}{N}$ selon que la transition correspondante du signal d'horloge de réception, $\left(\dfrac{2\pi}{N}\right.$ désignant le pas élémentaire d'évolution de la phase du signal d'horloge de réception$\Big)$ le signal d'horloge de réception ainsi asservi étant utilisé pour échantillonner le message mémorisé par ailleurs pendant la phase d'asservissement. Un tel dispositif est décrit dans la demande de brevet français N° 8 007 015 déposée le 28 mars 1980 au nom de la demanderesse et publiée le 2 octobre 1981 sous le numero de publication 2 479 620.

Un tel dispositif est mal adapté à la synchronisation de messages brefs. En effet plus le message est bref, et plus le nombre de transitions à l'intérieur de ce message est faible (on entend par transition le passage d'un niveau logique à un autre). Or plus le nombre de transitions est faible, plus la recherche de la synchronisation est longue. Si de surcroît on ne peut agir sur la phase de l'horloge de réception, à chaque transition, que par pas élémentaires, on voit tout de suite que la réception d'un message sera souvent terminée avant d'avoir réussi à retrouver la synchronisation.

La présente invention a pour objet un procédé et un dispositif de synchronisation évitant cet inconvénient.

Selon l'invention, le procédé de synchronisation de messages comportant au moins »p« transitions (»p« étant un nombre entier), par asservissement de la phase d'un signal d'horloge de réception à la phase des messages reçus et par échantillonnage des messages mémorisés au moyen du signal d'horloge de réception asservi, ce procédé est tel que l'asservissement consiste d'une part à faire évoluer le signe de la phase du signal d'horloge de réception d'après le signe de l'écart observé entre les transitions du message reçu et les transitions correspondantes du signal d'horloge de réception, d'autre part à faire évoluer la valeur absolue de la phase du signal d'horloge de réception d'une quantité $A_i\dfrac{2\pi}{N}$ lors de la »$i^{ème}$« transition du message reçu $\Big($»$i$« étant un entier variable de 1 à »p« et $\dfrac{2\pi}{N}$ représentant le pas élémentaire d'évolution de la phase du signal d'horloge de réception$\Big)$, la suite $|A_i|$ constituant une suite de valeurs entières décroissantes telles que, quel que soit le déphasage $\Phi$ existant entre le signal d'horloge de réception et les messages reçus, il existe des valeurs $A_i$ vérifiant

$$\sum_{i=1}^{p} a_i A_i = M,$$

M étant un nombre entier tel que

$$\left| \Phi - M\frac{2\pi}{N} \right| < \frac{2\pi}{N}$$

et $a_i$ étant égal à $+1$ ou à $-1$ selon que la $i^{ème}$ transition du message reçu est en avance ou en retard par rapport à la transition correspondante du signal d'horloge de réception.

L'invention a également pour objet un dispositif de synchronisation de messages reçus par un récepteur à l'aide d'un signal d'horloge de réception ajustable, chaque message étant constitué par des éléments binaires comportant au moins un nombre entier p de transitions, le dispositif comprenant: une ligne à retard destinée à mémoriser les messages reçus; un générateur de signal d'horloge rapide de fréquence N fois supérieure à la fréquence d'émission des éléments binaires constituant les messages; un échantillonneur couplé à la sortie de la ligne à retard, pour échantillonner les messages mémorisés sortant de la ligne à retard, au moyen du signal d'horloge de réception; et un circuit d'asservissement de la phase du signal d'horloge de réception à la phase des messages reçus, caracrérisé en ce que le circuit d'asservissement comprend: un générateur du signal d'horloge de réception couplé à l'échantillonneur; un circuit de détection des transitions des messages reçus; un circuit de détection du signe de l'écart entre les transitions des messages reçus et les transitions correspondantes du signal d'horloge de réception, couplé d'une part à la sortie de détection des transitions des messages reçus et d'autre part à la sortie du générateur du signal d'horloge de réception; un compteur de transitions relié à la sortie du circuit de détection des transitions des messages reçus pour compter le nombre de transitions du message reçu, et une mémoire morte dont les entrées d'adressage sont reliées aux sorties respectives du circuit de détection de signe et aux sorties du compteur de transition pour délivrer une valeur de commande, à chaque transition i du message reçu, à des entrées de commande de phase du générateur de signal d'horloge de réception pour faire évoluer la phase du signal d'horloge de réception d'une quantité $\pm A_i \frac{2\pi}{N}$ en fonction du signe délivré par le circuit de détection de signe, $A_i$ désignant un élément d'une suite $|A_i|$ de p valeurs entières décroissantes mémorisées sous la forme $N \pm A_i$ à l'intérieur de la mémoire morte et vérifiant l'équation

$$\sum_{i=1}^{p} a_i A_i = M$$

où M désigne un nombre entier par lequel il faut multiplier la quantité de phase élémentaire $\frac{2\pi}{N}$ pour obtenir le déphasage $\Phi$ existant entre le signal d'horloge de réception et le message reçu, à $\frac{2\pi}{N}$ près.

D'autres objets et caractéristiques de la présente invention apparaîtront à la lecture de la description suivante d'un exemple de réalisation, ladite description étant faite en relation avec les dessins ci-annexés dans lesquels:

- la figure 1 est un diagramme destiné à illustrer le procédé de synchronisation conforme à l'invention pour des valeurs particulières des nombres $A_i$, N et p;
- la figure 2 est un schéma du dispositif de synchronisation conforme à l'invention;
- la figure 3 est un diagramme des temps représentant les signaux obtenus en différents points du dispositif représenté à la figure 2.

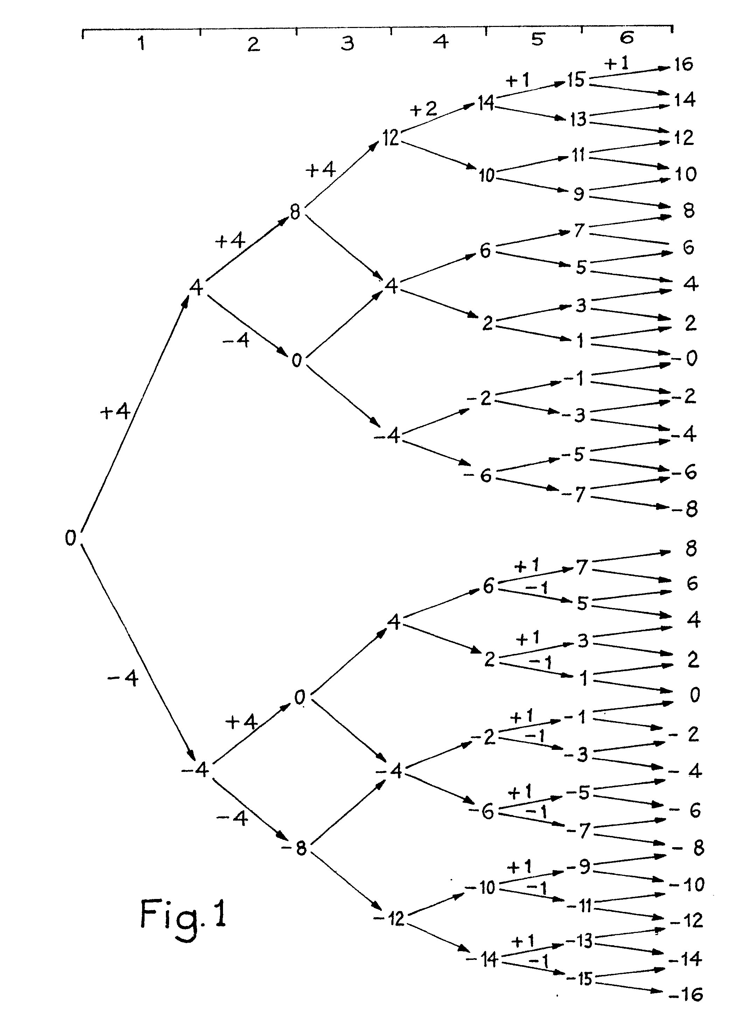

Le diagramme représenté sur la figure 1 montre les différentes manières de retrouver la synchronisation lors de la réception d'un message à partir d'un état désynchronisé symbolisé par une phase du signal d'horloge de réception égale à 0.

A titre d'exemple, ce diagramme correspond aux valeurs suivantes:

$N = 32$, $p = 5$, $A_1 = A_2 = A_3 = 4$, $A_4 = 2$ et $A_5 = 1$.

On suppose que chaque message reçu comporte au moins p (c'est-à-dire ici 5) transitions. On suppose également que l'on connaît l'instant auquel on commence à recevoir le message, de manière à mettre en route le procédé de synchronisation à cet instant, et que cet instant est connu à $\frac{T}{2}$ près, (T désignant la période du signal d'horloge d'émission), de manière à être sûr que la pre première transition reçue est effectivement la première transition du message. Ces hypothèses s'appliquent particuliérement à un fonctionnement en évasion de fréquences.

Si la première transition du message est en retard par rapport à la transition correspondante du signal d'horloge de réception, la phase du signal d'horloge de réception est diminuée d'une quantité égale à $4. \frac{2\pi}{N}$, c'est-à-dire de quatre pas élémentaires. $\Big($On entend par transition correspondante la transition du signal d'horloge de réception qui coïnciderait avec la $i^{\text{ème}}$ transition du message reçu, à la précision $\frac{2\pi}{N}$ près, si les signaux d'horloge d'émission et de réception en phase$\Big)$. En revanche, si la première transition du message reçu est en avance par rapport à la transition correspondante du signal d'horloge de réception, la phase du signal d'horloge de réception est augmentée de quatre pas élémentaires. De la même façon, lors de la deuxième transition du message reçu, on ajoute ou on retranche quatre pas élémentaires à la phase du signal d'horloge de réception obtenue après la première transition, et ainsi de suite jusqu'à la cinquième transition où l'on ajoute ou l'on retranche un pas élémentaire à la phase du signal d'horloge de réception obtenue après la quatrième transition.

Soir $\Phi$ le déphasage existant entre le message reçu et le signal d'horloge de réception. Comme la phase du signal d'horloge de réception ne peut prendre que des valeurs discrètes $\Big(\frac{2\pi}{N}$ représentant son pas élémentaire d'évolution$\Big)$ on fait appel à une quantité

$$M \times \frac{2\pi}{N},$$

M étant un nombre entier tel que la quantité

$$M \times \frac{2\pi}{N}$$

soit la plus proche possible du déphasage $\Phi$,

c'est-à-dire tel que

$$\left| \Phi - M \frac{2\pi}{N} \right| < \frac{2\pi}{N}.$$

Quel que soit le nombre M, on sait qu'il existe une suite de valeurs entières positives décroissantes $A_i$ (i variant de 1 à p) vérifiant la relation

$$\sum_{i=1}^{p} a_i A_i = M,$$

$a_i$ étant égal à $+1$ ou à $-1$ selon que la $i^{ème}$ transition du message reçu est en retard ou en avance par rapport à la transition correspondante du signal d'horloge de réception.

Par conséquent quel soit le déphasage existant initialement entre message reçu et signal d'horloge de réception, le procédé selon l'invention permet de retrouver la synchronisation au bout de p transitions du message reçu. L'acquisition de la synchronisation ne dépend donc plus de la durée du message, comme c'était le cas dans les systèmes antérieurs. La synchronisation des messages brefs est donc assurée de manière certaine, à condition toutefois que ces messages comportent au moins p transitions.

Ce procédé permet de retrouver la synchronisation avec une rapidité accrue par rapport aux systèmes antérieurs puisqu'on converge vers l'état synchronisé de manière grossière lors des premières transitions, puis affinée lors des transitions suivantes que dans les systèmes antérieurs la précision dans les corrections de phase est constante tout au long de la période de synchronisation.

Pour accroître la précision du procédé conforme à l'invention on peut envisager, pour une valeur de p donnée, d'adjoindre à la suite $A_i$ un terme $A_{p+1}$ de valeur égale à 1, comme cela est représenté sur la figure 1.

Pour la même valeur de N, on peut bien sûr trouver plusieurs suites $A_i$ avec des valeurs de p différentes, la valeur minimale de p étant égale à $\log_2 \frac{N}{2}$.

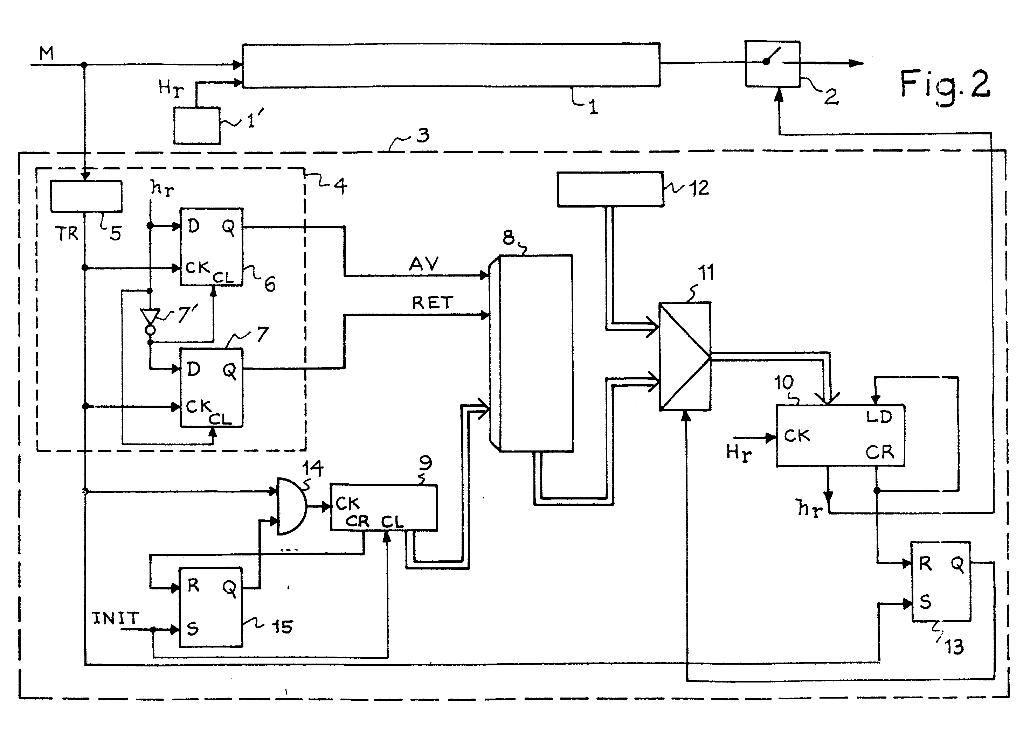

Le dispositif de synchronisation de messages représenté sur la figure 2 comporte une ligne à retard 1 constituée par exemple par un registre à décalage muni d'une entrée de donnée qui reçoit les messages M reçus à l'entrée du dispositif, et d'une entrée d'horloge qui reçoit un signal $H_r$ d'horloge de réception rapide, de fréquence égale à N fois la fréquence f d'émission des éléments binaires constituant les messages, et de phase fixe. Le signal $H_r$ est fourni par une horloge 1'. La sortie de la ligne à retard 1 est reliée à l'entrée d'un échantillonneur 2 dont l'entrée de commande reçoit un signal $h_r$ d'horloge de réception lent (appelé par la suite signal d'horloge de réception), de fréquence f, fourni par un circuit 3 d'asservissement de la phase du signal d'horloge de réception à la phase des messages reçus.

Le circuit d'asservissement 3 comporte un circuit 4 de détection d'avance ou de retard des transitions du signal d'horloge de réception par rapport aux transitions des messages reçus.

Le circuit de détection 4 comporte un circuit de dérivation 5 muni d'une entrée qui reçoit les messages M et d'une sortie qui fournit un signal TR présentant une impulsion à chaque transition des messages M reçus.

Le circuit de détection 4 comporte également une première bascule 6, du type D, dont l'entrée D reçoit le signal d'horloge de réception $h_r$ et dont l'entrée d'horloge CK reçoit le signal TR fourni par le circuit de dérivation 5. Le circuit de détection 4 comporte également une seconde bascule 7 du type D, dont l'entrée D reçoit le signal d'horloge de réception inversé à l'aide d'un inverseur 7', et dont l'entrée d'horloge CK reçoit le signal TR fourni par le circuit de dérivation 5. La bascule 6 est munie d'une entrée CL de remise à zéro reliée à la sortie de l'inverseur 7'. La bascule 7 est munie d'une entrée CL de remise à zéro qui reçoit le signal d'horloge de réception $h_r$. La sortie Q de la bascule 6 fournit un signal AV indiquant que les transitions des messages reçus sont en avance par rapport aux transitions correspondantes du signal d'horloge de réception $h_r$. La sortie Q de la bascule 7 fournit un signal RET indiquant que les transitions des messages reçus sont en retard par rapport aux transitions correspondantes du signal d'horloge de réception $h_r$.

Le circuit d'asservissement 3 comporte également une mémoire morte 8 dont les entrées d'adresse reçoivent les signaux AV et RET ainsi que les signaux de sortie d'un compteur de transition 9, »modulo p«. Dans la mémoire 8 sont stockées les 2 p valeurs $N \pm A_i$.

Le circuit d'asservissement 3 comporte également un diviseur 10 à rang variable constitué par exemple par un compteur programmable muni d'une entrée d'horloge CK qui reçoit le signal $H_r$ d'horloge de réception rapide, et d'entrées de chargement reliées aux sortie d'un multiplexeur 11. Le multiplexeur 11 est lui-même muni de premières entrées de données reliées aux sorties de la mémoire morte 8, de secondes entrées reliées à une configuration câblée 12 représentant la valeur N codée numériquement, et d'une entrée de commande reliée à la sortie Q d'une bascule 13 du type »RS«. L'entrée R de la bascule »RS« 13 est reliée à la sortie de retenue CR du compteur 10, la sortie de retenue CR du compteur 10 étant par ailleurs reliée à son entrée LD de commande de chargement. L'entrée S de la bascule 13 est reliée à la sortie du circuit de dérivation 5. La sortie du compteur 10 fournit le signal d'horloge de réception $h_r$.

L'entrée d'horloge CK du compteur 9 est reliée à la sortie d'une porte »ET« 14 munie d'une première entrée à la sortie du circuit de dérivation 5 et d'une seconde entrée reliée à la sortie Q d'une bascule 15 du type »RS«. L'entrée R de la bascule 15 est reliée à la sortie de retenue CR du compteur 9, son entrée S recevant un signal INIT indiquant un début de réception de message. Le compteur 9 est également muni d'une entrée CL de remise à zéro qui reçoit le signal INIT.

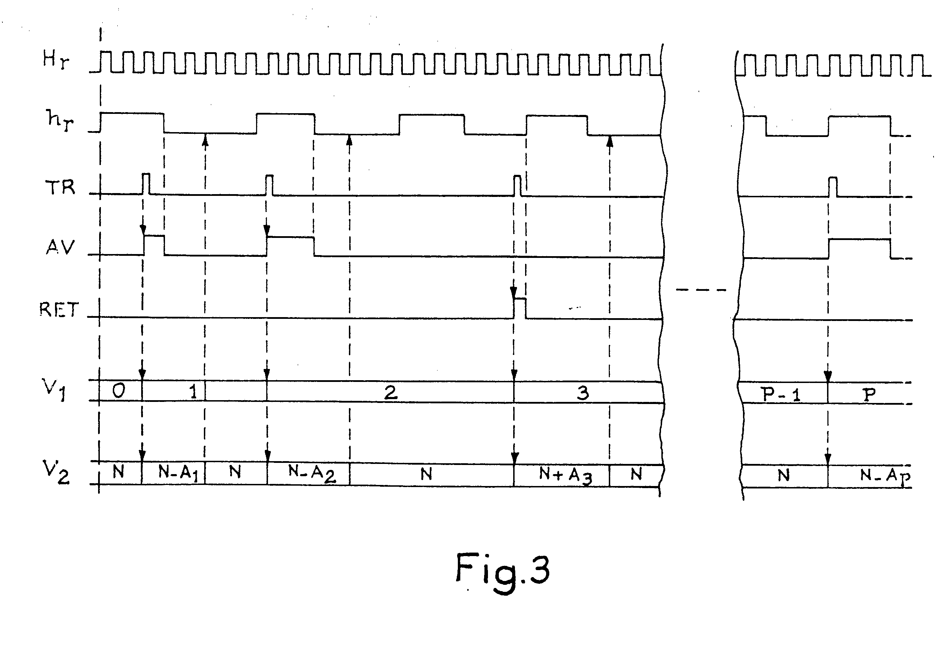

Le fonctionnement du dispositif représenté sur la figure 2 est maintenant expliqué en relation avec la figure 3 représentant un diagramme des temps des signaux obtenus en différents points de ce dispositif. La première ligne de la figure 3 représente le signal d'horloge de réception rapide $H_r$, de fréquence Nf. La deuxième ligne de la figure 3 représente le signal d'horloge de réception $h_r$, de fréquence f. La troisième, la quatrième et la cinquième lignes représentent respectivement le signal TR fourni par le circuit de dérivation 5, le signal AV fourni par la bascule 6 et le signal RET fourni par la bascule 7. La sixième ligne représente les variations de la valeur décimale $V_1$ du signal fourni par le compteur 9. La septième ligne représente les variations de la valeur décimale $V_2$ du rang du diviseur à rang variable 10, ou plus exactement du signal de chargement du compteur qui le constitue.

A la première transition du message reçu, le signal $V_1$ passe de la valeur 0 à la valeur 1. En même temps, et en supposant que la première transition du message reçu est en avance par rapport à la transition correspondante du signal $h_r$, le signal AV passe du niveau logique 0 au niveau logique 1, pour repasser ensuite au niveau logique 0 au front descendant suivant du signal $h_r$, le signal RET restant lui au niveau logique 0.

La mémoire morte 8, adressée par ces valeurs particulières des signaux AV, RET et $V_1$, fournit alors la valeur $N-A_1$. La sortie Q de la bascule RS 13 ayant été mise au niveau logique 1 lors de la première transition du message reçu, le multiplexeur 11 sélectionne alors les signaux présents en sortie de la mémoire morte 8, et le compteur 10, chargé avec la valeur $N-A_1$ restitue alors, au bout de $N-A_1$ périodes du signal $H_r$, un signal de fréquence $\dfrac{N}{N-A_1}$ f, ce qui permet de faire subir au signal $h_r$ une avance de phase de

$$A_1 \times \frac{2\pi}{N}.$$

Au bout de ces $N-A_1$ périodes du signal $H_r$, la sortie de retenue CR du compteur 10 passe du niveau logique 0 au niveau logique 1, entraînant ainsi le passage de la sortie Q de la bascule 13 du niveau logique 1 au niveau logique 0, et la sélection par le multiplexer 11 des signaux fournis par le circuit 12. Le compteur 10, chargé alors avec la valeur N, divise la fréquence Nf par la valeur N, ce qui ne procure aucun déphasage sur le signal $h_r$. Le compteur 10 continue ainsi de diviser par la valeur N et de se recharger automatiquement avec la valeur N tant que le message reçu ne présente pas de nouvelle transition.

Le même processus se répète lorsqu'apparaît une deuxième transition du message reçu. Sur la figure 3, on a également supposé que cette deuxième transition est en avance par rapport à la transition correspondante du signal $h_r$. Le compteur 10 procure alors sur le signal $h_r$ une avance de phase de

$$\frac{2\pi}{N} \times A_2.$$

De même, à la troisième transition du message reçu, le compteur 10 procure sur le signal $h_r$ un retard de phase de

$$\frac{2\pi}{N} \times A_3.$$

On suppose en effet que cette troisième transition est en retard par rapport à la transition correspondante du signal $h_r$. A la troisième transition du message reçu, le signal RET passe alors du niveau logique 0 au niveau logique 1 pour repasser ensuite du niveau logique 0 lors du front montant suivant du signal $h_r$.

La synchronisation s'établit ainsi de manière progressive, jusqu'à l'apparition de la $p^{ième}$ transition du message reçu, le signal d'horloge $h_r$ subissant alors un déphasage d'amplitude $\dfrac{2\pi}{N} A_p$, et de signe déterminé selon les mêmes régles que précédemment (par exemple un retard de phase, en accord avec la figure 3). La synchronisation est alors retrouvée, et, dans le cas où le message reçu ne présente plus de nouvelle transition, le signal d'horloge de réception $h_r$ conserve la phase ainsi acquise. Dans le cas où le message reçu présente de nouvelles transitions, la phase du signal d'horloge de réception oscille autour de cette phase avec l'amplitude égale au pas élémentaire de déphasage dans le cas où $A_p$ a une valeur égale à 1 et au blocage de l'horloge du compteur de transitions entre la $p^{ième}$ de transition d'un message donné et la première transition du message suivant, au moyen de la porte »ET« 14 et de la bascule 15.

Certaines variantes pourraient être apportées au dispositif de synchronisation décrit ci-dessus sans sortir pour autant du cadre de l'invention. On pourrait notamment envisager de remplacer le générateur d'horloge de réception de phase variable par un dispositif permettant de fournir simultanément les différentes phases possibles et de sélectionner une seule de ces phases à un instant donné. On pourrait encore envisager d'utiliser un dispositif de synchronisation classique en alternance avec le dispositif de synchronisation conforme à l'invention.

**Revendications**

1. Procédé de synchronisation de messages comportant au moins »p« transitions (»p« étant un nombre entier), par asservissement de la phase d'un signal d'horloge de réception à la phase des messages reçus et par échantillonnage des messages mémorisés au moyen du signal d'horloge de réception asservi, le procédé consistant, d'une part, à faire évoluer le signe de la phase du signal d'horloge de réception d'après le signe de l'écart observé entre les transitions du message reçu et les transitions correspondantes du signal d'horloge de réception, et d'autre part, à faire évoluer la valeur absolue de la phase du signal d'horloge de réception d'une quantité $A_i \dfrac{2\pi}{N}$ à chaque transition i du message reçu, où i désigne un entier variable de 1 à »p«, $\dfrac{2\pi}{N}$ représente le pas élémentaire d'évolution de la phase du signal d'horloge de réception, et $A_i$ désigne un élément d'une suite $|A_i|$ de valeurs entières décroissantes telles que quel que soit le déphasage $\Phi$ existant entre le signal d'horloge de réception et les messages reçus, il existe des valeurs $A_i$ de la suite $|A_i|$ vérifiant

$$\sum_{i=1}^{p} a_i A_i = M,$$

M étant un nombre entier tel que

$$\left| \Phi - M \frac{2\pi}{N} \right| < \frac{2\pi}{N}$$

et $a_i$ étant égal à $+1$ ou à $-1$ selon que la $i^{ème}$ transition du message reçu est en avance ou en retard par rapport à la transition correspondante du signal d'horloge de réception.

2. Dispositif de synchronisation de messages reçus par un récepteur à l'aide d'un signal d'horloge de réception ajustable, chaque message étant constitué par des éléments binaires comportant au moins un nombre entier p de transitions, le dispositif comprenant
une ligne à retard (1) destinée à mémoriser les messages reçus
un générateur de signal d'horloge rapide (1') de fréquence N fois supérieure à la fréquence d'émission des éléments binaires constituant les messages
un échantillonneur (2) couplé à la sortie de la ligne à retard, pour échantillonner les messages mémorisés sortant de la ligne à retard, au moyen du signal d'horloge de réception
et un circuit d'asservissement (3) de la phase du signal d'horloge de réception à la phase des messages reçus, comprenant
un générateur du signal d'horloge de réception (10) couplé à l'échantillonneur
un circuit de dérivation (5) des transitions des messages reçus
un circuit de détection (6, 7) du signe de l'écart entre les transitions des messages reçus et les transitions correspondantes du signal d'horloge de réception, couplé d'une part à la sortie de dérivation (5) des transitions des messages reçus et d'autre part à la sortie du circuit d'asservissement (3) fournissant le signal d'horloge de réception
un compteur de transitions (9) relié à la sortie du circuit de détection des transitions des messages reçus pour compter le nombre de transitions du message reçu,
et une mémoire morte (8) dont les entrées d'adressage sont reliées aux sorties respectives du circuit de détection de signe (6, 7) et aux sorties du compteur de transition (9) pour délivrer une valeur de commande à chaque transition i du message reçu, à des entrées de commande de phase du générateur de signal d'horloge de réception pour faire évoluer la phase du signal d'horloge de réception d'une quantité $\pm A_i \dfrac{2\pi}{N}$ en fonction du signe délivré par le circuit de détection de signe, $A_i$ désignant un élément d'une suite $|A_i|$ de p valeurs entières décroissantes mémorisées sous la forme $N \pm A_i$ à l'intérieur de la mémoire morte et vérifiant l'équation

$$\sum_{i=1}^{p} a_i A_i = M$$

où M désigne un nombre entier par lequel il faut multiplier la quantité de phase élémentaire $\dfrac{2\pi}{N}$ pour obtenir le déphasage $\Phi$ existant entre le signal d'horloge de réception et le message reçu à $\dfrac{2\pi}{N}$ près.

3. Dispositif selon la revendication 2, caractérisé en ce que le compteur de transition est bloqué entre la »p$^{ème}$« transition d'un message donné et la 1$^{ère}$ transition du message suivant par un circuit de blocage des transitions transmises par le circuit de détection des transitions des messages reçus.

4. Dispositif selon la revendication 3, caractérisé en ce que le circuit de blocage du compteur de transition comporte une bascule (15) du type »RS« dont l'entrée R est reliée à la sortie de retenue du compteur de transition, dont l'entrée S reçoit un signal d'initialisation au début de la réception d'un message, et dont la sortie Q est reliée à une première entrée d'une porte »ET« (14), une seconde entrée de la porte »ET« (14) étant reliée à la sortie du circuit de détection des messages reçus et la sortie de la porte »ET« étant reliée à l'entrée d'horloge du compteur (9) de transitions.

5. Dispositif selon l'une quelconque des revendications 2 à 4, caractérisé en ce que le générateur d'horloge de réception comporte un diviseur de fréquence à rang variable, dont l'entrée de signal reçoit le signal d'horloge de réception rapide délivré par le générateur de signal rapide, de rythme égal à N fois le rythme du signal d'horloge de réception et de phase fixe, et des moyens pour commander le rang du diviseur de manière que ce rang soit égal à $N \pm A_i$ lors de la détection de la »i$^{ème}$« transition du message reçu et à N en l'absence de transition et entre les »i$^{ème}$« et »i $+ 1^{ème}$« transitions du message reçu, lorsqu'une première division par $N \pm$ a déjà été effectuée.

6. Dispositif selon la revendication 5, caractérisé en ce que le diviseur à rang variable est constitué par un compteur programmable (10) dont les entrées de chargement et l'entrée de commande de chargement sont reliées aux sorties des moyens de commande du rang du diviseur, dont l'entrée d'horloge reçoit le signal d'horloge de

réception rapide, et dont la sortie fournit le signal d'horloge de réception.

7. Dispositif selon les revendications 5 et 6, caractérisé en ce que les moyens de commande du rang du diviseur comportent un multiplexeur (11) muni de premières entrées reliées aux sorties de la mémoire morte et, de secondes entrées recevant en permanence la valeur »N« codée numériquement et une bascule (13) du type »RS« dont l'entrée R est reliée à la sortie de retenue du compteur programmable (10) dont l'entrée S est reliée à la sortie du circuit (5) de dérivation de transitions, et dont la sortie Q est reliée à l'entrée de commande du multiplexeur (11), la sortie de retenue du compteur programmable (10) étant reliée à son entrée du commande de chargement.

## Patentansprüche

1. Verfahren zur Synchronisation von Nachrichten, die wenigstens »p« Übergänge (wobei »p« eine ganze Zahl ist) enthalten, indem die Phase eines Empfangs-Taktsignals der Phase der empfangenen Nachrichten nachgeregelt wird, und durch Abtastung der gespeicherten Nachrichten mittels des geregelten Empfangs-Taktsignals, wobei das Verfahren einerseits darin besteht, daß das Vorzeichen der Phase des Empfangs-Taktsignals sich entsprechend dem Vorzeichen der beobachteten Abweichung zwischen den Übergängen der empfangenen Nachricht und den entsprechenden Übergängen des Empfangs-Taktsignals entwickelt, und andererseits darin besteht, daß sich der Absolutwert der Phase des Empfangs-Taktsignals um eine Größe $A_i \frac{2\pi}{N}$ bei jedem Übergang i der empfangenen Nachricht entwickelt, worin i eine ganze Zahl von 1 bis »p« ist, $\frac{2\pi}{N}$ den Elementarschritt der Phasenentwicklung des Empfangs-Taktsignals darstellt und $A_i$ ein Element einer Folge $|A_i|$ von ganzzahligen abnehmenden Werten bezeichnet, die derart sind, daß stets unabhängig von der Phasenverschiebung $\Phi$ zwischen dem Empfangs-Taktsignal und den empfangenen Nachrichten Werte $A_i$ der Folge $|A_i|$ existieren, die der Bedingung

$$\sum_{i=1}^{p} a_i A_i = M$$

genügen, worin M eine ganze Zahl der Art ist, daß

$$\left| \Phi - M \frac{2\pi}{N} \right| < \frac{2\pi}{N},$$

und $a_i$ gleich +1 oder −1 ist, je nachdem, ob der ite Übergang der empfangenen Nachricht gegenüber dem entsprechenden Übergang des Empfangs-Taktsignals voreilt oder verzögert ist.

2. Vorrichtung zur Synchronisation von durch einen Empfänger empfangenen Nachrichten mittels eines einstellbaren Empfangs-Taktsignals, wobei jede Nachricht aus Binärelementen gebildet ist, die wenigstens eine ganze Anzahl p von Übergängen enthalten, wobei die Vorrichtung enthält:

eine Verzögerungsleitung (1), die zum Speichern der empfangenen Nachrichten bestimmt ist, einen schnellen Taktsignalgenerator (1'), dessen Frequenz N-fach größer als die Sendefrequenz der Binärelemente ist, aus denen die Nachrichten bestehen,

einen Abtaster (2), der an den Ausgang der Verzögerungsleitung angekoppelt ist, um die auf der Verzögerungsleitung austretenden gespeicherten Nachrichten mittels des Empfangs-Taktsignals abzutasten,

und eine Regelschaltung (3) zur Regelung der Phase des Empfangs-Taktsignals durch die Phase der empfangenen Nachrichten,

mit einem Empfangs-Taktsignalgenerator (10), der an den Abtaster angekoppelt ist,

einer Ableitungsschaltung (5) zur Ableitung der Übergänge der empfangenen Nachrichten, einer Detektionsschaltung (6, 7) zur Erfassung des Vorzeichens der Abweichung zwischen den Übergängen der empfangenen Nachrichten und den entsprechenden Übergängen des Empfangs-Taktsignals, welcher einerseits angekoppelt ist an den Ausgang (5) zur Ableitung der Übergänge der empfangenen Nachrichten und andererseits an den Ausgang der Regelschaltung (3), welche das Empfangs-Taktsignal liefert,

einen Zähler (9) zum Zählen der Übergänge, welcher an den Ausgang der Detektionsschaltung für die Übergänge der empfangenen Nachrichten angeschlossen ist, um die Anzahl von Übergängen der empfangenen Nachrichten zu zählen, und einen Festwertspeicher (8), dessen Adressiereingänge mit den entsprechenden Ausgängen der Vorzeichen-Detektionsschaltung (6, 7) und mit den Ausgängen des Übergangszählers (9) verbunden sind, um einen Steuerwert bei jedem Übergang i der empfangenen Nachricht an Phasensteuereingänge des Empfangs-Taktsignalgenerators abzugeben, um zu veranlassen, daß sich die Phase des Empfangs-Taktsignals um eine Größe $\pm A_i \frac{2\pi}{N}$ in Abhängigkeit von den Vorzeichen entwickelt, welches von der Vorzeichen-Detektionsschaltung abgegeben wird, worin $A_i$ ein Element einer Folge $|A_i|$ von p ganzzahligen abnehmenden Werten bezeichnet, welche in der Form $N \pm A_i$ innerhalb des Festwertspeichers gespeichert sind und die Beziehung

$$\sum_{i=1}^{p} a_i A_i = M$$

erfüllen, worin M eine ganze Zahl bedeutet, mit der die Größe der elementaren Phase $\frac{2\pi}{N}$ multipliziert werden muß, um die Phasenverschiebung $\Phi$ zu erhalten, die zwischen dem Empfangs-Taktsignal und der empfangenen Nachricht auf $\frac{2\pi}{N}$ genau vorhanden ist.

3. Vorrichtung nach Anspruch 2, dadurch gekennzeichnet, daß der Übergangszähler zwischen dem »p-ten« Übergang einer gegebenen Nachricht und dem ersten darauffolgenden Übergang der Nachricht angehalten wird durch eine Schaltung zum Blockieren der Übergänge, welche durch die Übergangs-Detektionsschaltung für die empfangenen Nachrichten übertragen werden.

4. Vorrichtung nach Anspruch 3, dadurch gekennzeichnet, daß die Schaltung zum Anhalten des Übergangszählers eine Kippschaltung (15) vom RS-Typ umfaßt, deren Eingang R mit dem Halteausgang des Übergangszählers verbunden ist, dessen Eingang S ein Initierungssignal zu Beginn des Empfangs einer Nachricht empfängt und dessen Ausgang Q mit einem ersten Eingang einer AND-Schaltung (14) verbunden ist, wovon ein zweiter Eingang mit dem Ausgang der Detektionsschaltung für empfangene Nachrichten verbunden ist, während der Ausgang der AND-Schaltung mit dem Takteingang des Übergangszählers (9) verbunden ist.

5. Vorrichtung nach einem der Ansprüche 2 bis 4, dadurch gekennzeichnet, daß der Empfangs-Taktsignalgenerator einen Frequenzteiler mit variablem Rang umfaßt, dessen Signaleingang das schnelle Empfangs-Taktsignal empfängt, welches von dem schnellen Signalgenerator mit der N-fachen Frequenz des Empfangs-Taktsignals und mit fester Phase abgegeben wird, und Mittel zur Steuerung der Rangzahl des Teilers derart umfaßt, daß diese Rangzahl gleich $N \pm A_i$ bei der Erfassung des iten Übergangs der empfangenen Nachricht und gleich N bei ausbleibendem Übergang und zwischen dem iten und dem i+1ten Übergang der empfangenen Nachricht ist, wenn eine erste Teilung durch $N \pm A_i$ bereits erfolgte.

6. Vorrichtung nach Anspruch 5, dadurch gekennzeichnet, daß der Teiler mit variablem Rang durch einen programmierbaren Zähler (10) gebildet ist, dessen Ladeeingänge und Lade-Steuereingang mit den Ausgängen der Mittel zur Steuerung des Ranges des Teilers verbunden sind, wovon der Takteingang das schnelle Empfangs-Taktsignal empfängt und der Ausgang das Empfangs-Taktsignal abgibt.

7. Vorrichtung nach den Ansprüchen 5 und 6, dadurch gekennzeichnet, daß die Mittel zur Steuerung der Rangzahl des Teilers einen Multiplexer (11) umfassen, der mit ersten Eingängen versehen ist, welche mit den Ausgängen des Festwertspeichers verbunden sind, und zweiten Eingängen versehen ist, welche dauernd den digital codierten Wert »N« empfangen, und eine Kippschaltung (13) vom RS-Typ enthalten, deren Eingang R mit dem Halteausgang des programmierbaren Zählers (10) und deren Eingang S mit dem Ausgang der Schaltung (5) zum Ableiten von Übergängen verbunden ist, während ihr Ausgang Q mit dem Steuereingang des Multiplexers (11) verbunden ist und der Halteausgang des programmierbaren Zählers (10) mit seinem Lade-Steuereingang verbunden ist.

**Claims**

1. Method of synchronization of messages comprising at least »p« transitions (»p« being an integer), by slaving the phase of a reception clock signal to the phase of the received messages and by sampling the stored messages by means of the controlled reception clock signal, the method consisting in, on the one hand, causing the sign of the phase of the reception clock signal to evolve in accordance with the sign of the observed deviation between the transitions of the received message and the corresponding transitions of the reception clock signal and, on the other hand, to cause the absolute value of the phase of the reception clock signal to evolve by a quantity $A_i \dfrac{2\pi}{N}$ at each transition i of the received message, where i designates an integer varying from 1 to »p«, $\dfrac{2\pi}{N}$ representing the elementary step of evolution of the phase of the reception clock signal, and $A_i$ designating an element of a sequence $|A_i|$ of decreasing integers such that regardless of the phase shift $\Phi$ existing between the reception clock signal and the received messages there are always values $A_i$ of the sequence $|A_i|$ satisfying

$$\sum_{i=1}^{p} a_i A_i = M,$$

M being an integer such that

$$\left| \Phi - M \frac{2\pi}{N} \right| < \frac{2\pi}{N},$$

and $a_i$ being equal to $+1$ or to $-1$ depending on whether the ith transition of the received message is in advance of or delayed with respekt to the corresponding transition of the reception clock signal.

2. Device for the synchronization of messages received by a receiver by means of an adjustable reception clock signal, each message being formed of binary elements comprising at least an integer number p of transitions, the device comprising

a delay line (1) for storing the received messages, a rapid clock signal generator (1') having the N-fold frequency of the transmission frequency of the binary elements forming the messages,

a sampler (2) coupled to the output of the delay line for sampling the stored messages leaving the delay line by means of the reception clock signal, and a control circuit (3) for slaving the phase of the reception clock signal to the phase of the received messages, comprising

a generator for generating the reception clock signal (10) coupled to the sampler,

a circuit (5) for deriving the transitions of the received messages,

a circuit (6, 7) for the detection of the sign of the deviation between the transitions of the received messages and the corresponding transitions of the reception clock signal, coupled to the deriving output (5) of the transitions of the received messages on the one hand and, on the other hand, to the output of the control circuit (3) supplying the reception clock signal, a counter of the transitions (9) connected to the output of the circuit for the detection of the transitions of the received messages for counting the number of transitions of the received message, and a read only memory (8) the address inputs of which are connected to the respective outputs of the sign detection circuit (6, 7) and to the outputs of the transition counter (9) for supplying a control value at each transition i of the received message to phase control inputs of the reception clock signal generator for causing the phase of the reception clock signal to evolve by a quantity $\pm A_i \dfrac{2\pi}{N}$ in function of the sign delivered by the sign detection circuit, $A_i$ designating an element of a sequence $|A_i|$ of p decreasing integers stored in the form of $N \pm A_i$ inside the read only memory and satisfying the equation

$$\sum_{i=1}^{p} a_i A_i = M$$

wherein M designates an integer by which the elementary phase quantity $\dfrac{2\pi}{N}$ has to be multiplied for obtaining the phase shift $\Phi$ existing between the reception clock signal and the received message except for a value of $\dfrac{2\pi}{N}$.

3. Device according to claim 2, characterized in that the transition counter is blocked between the »pth« transition of a given message and the first following transition of the message, by a circuit for blocking the transitions transmitted by the circuit for the detection of the transitions of the received messages.

4. Device according to claim 3, characterized in that the circuit for blocking the transition counter comprises a flip-flop (15) of »RS« type the R input of which is connected to the holding output of the trasition counter, the S input of which receives an initialization signal at the beginning of the reception of a message and the Q output of which is connected to a first input of an »AND« gate (14) a second input of which is connected to the output of the circuit for the detection of the received messages, and the output of the »AND« gate being connected to the clock input of the transition counter (9).

5. Device according to any of claims 2 to 4, characterized in that the reception clock generator comprises a frequency divider of variable rank the signal input of which receives the rapid reception clock signal supplied by the rapid signal generator having a rhythm equal to the N-fold rhythm of the reception clock signal and a fixed phase, and means for controlling the rank of the divider in such a manner that this rank is equal to $N \pm A_i$ at the detection of the »ith« transition of the received message and to N in the absence of transitions and between the »ith« and »i + 1th« transitions of the received message when a first division by $N \pm A_i$ has already been performed.

6. Device according to claim 5, characterized in that the variable rank divider is formed of a programmable counter (10) the loading inputs and the loading control input of which are connected to the outputs of the means for controlling the rank of the divider, the clock input of which receives the rapid reception clock signal and the output of which supplies the reception clock signal.

7. Device according to claims 5 and 6, characterized in that the means for controlling the rank of the divider comprise a multiplexer (11) equipped with first inputs connected to the outputs of the read only memory and second inputs receiving continuously the digitally coded value »N«, and a flip-flop (13) of »RS« type the R input of which is connected to the holding output of the programmable counter (10), the S input of which is connected to the output of the circuit (5) for deriving the transitions and the Q output of which is connected to the control input of the multiplexer (11), the holding output of the programmable counter (10) being connected to its loading control input.

Fig.1

Fig. 2

0 056 208

Fig.3